# EUROPEAN PATENT APPLICATION

(11) **EP 4 039 089 A1**
(43) Date of publication of application: **10.08.2022**
(21) Application number: 21155305.2
(22) Date of filing: 04.02.2021
(51) Int. Cl.: A01M 1/02

(54) **FLYING INSECT MONITORING SYSTEM AND METHOD**

(71) Applicant: Katholieke Universiteit Leuven, KU Leuven R&D, 3000 Leuven (BE)
(72) Inventor: DE KETELAERE, Bart, 2530 Boechout (BE); KALFAS, Ioannis, 3001 Heverlee (BE); MATHIJS, Frank, 3010 Kessel-Lo (BE)

(57) **Abstract**

A system for monitoring flying insects, the system comprising: a container defining an interaction volume, the container further comprising an entrance channel disposed in the container side wall or the container bottom wall having a first open-end facing the interaction volume, a second open-end opposed to the first open-end and a one-way tubular shaped passage region connecting the second open-end with the first open-end and configured to guide a flying insect from outside the container to the interaction volume; the interaction volume comprising: a wingbeat sensor, an insect immobilization surface adapted to capture and immobilize the flying insect; an optical image sensor having a field of view in the direction of the insect immobilization surface so that, when in use, the field of view covers at least a portion of a unique segment of the insect immobilization surface; an illumination means configured to illuminate the unique segment of the insect immobilization; and a processing unit in communication with the wingbeat sensor and the optical image sensor, wherein the processing unit is configured to receive and process the wingbeat signal from the wingbeat sensor and the optical image data from the optical image sensor to monitor, when in use, the flying insect.

## Description

### Technical field of the invention

The present invention relates to the field of integrated pest management and in particular to a system and method for monitoring flying insects.

### Background of the invention

In integrated Pest Management it is of crucial importance to detect pest insects as soon as possible. Classically, this is performed by placing manual traps in different fields, often in reference fields for a given geographical region. Those manual traps attract the insects by utilizing colors (e.g. yellow) or odour (e.g. pheromones). The colored traps mostly have a sticky surface, whereas the odour traps lure the insects in without possibility to escape so that they drown in liquid. At regular time intervals, the traps are collected and trained personnel count the insects, and check the species they belong to. If pest insects are present, a warning is sent to growers in that region, advising them to use pesticides to stop the invasion.

This practice has many disadvantages mainly because it is very labor intensive. As a result, only a limited number of traps is used in practice, resulting in a low spatial resolution. Additionally, the traps are only analyzed on a weekly basis, resulting in a low time resolution. This weak spatio-temporal resolution makes it difficult to act fast and accurate when pests emerge.

Because of these apparent drawbacks many researches have been published on automatic counting and identification. These systems are mainly based on image analysis, as for example the automated trap called "Trapview" (https://www.trapview.com/v2/en/). Deep Learning is used to analyse the images of insects that are stuck on the sticky plates inside the trap. Such automation potentially leads to reduced workload for growers in the near future, increase reliability and adds further to the application of sticky traps in practice.

However, these solutions of automated monitoring of flying insects is subject to actual pest or beneficial densities that are only based on the analysis of image data of sticky plates and may be limited to certain species. Additional information from the trapped flying insects such as wingbeat signals, may further improve the accuracy of the classification.

Moreover, automated monitoring systems using Deep Learning may be costly.

Therefore, there is need to systems for monitoring flying insects which address the above shortcomings.

### Summary of the invention

It is an object of the present invention to provide a system and method for monitoring flying insects to overcome at least part of the aforementioned drawbacks. The object is accomplished by providing a system comprising a container and an interaction volume configured to measure a wingbeat signal and an optical image of a flying insect, and processing the data according to embodiments of the present invention.

It is an advantageous of embodiments of the present invention that wingbeat signatures are used in combination with image data to classify flying insect.

It is a further advantageous that image data may be used to further discriminate between wingbeat signatures of flying insects on species level. Indeed, this species-level identification is of crucial importance e.g. in agriculture where different species of Drosophila (fruit fly) are other harmful in the orchards, or have no negative effect Drosophila Melanogaster vs Suzukii for example).

This is especially advantageous for the wingbeat sensor where forcing the insects to fly in a standardized manner through the wingbeat sensor lowers the intra-species variability in wingbeat characteristics, improving the classification of different species and opening the possibility to use wingbeat signatures to discriminate flying insects at the species level.

It is an advantageous of embodiments of the present invention that the design of the container may allow to accurately monitor the flying insect and correlate its wingbeat signal with its image data.

It is an advantageous of embodiments of the present invention that the entrance channel is configured to force the flying insect to fly again when entering the interaction volume and that its wingbeat signal can be measured directly.

It is an advantageous of embodiments of the present invention that the entrance channel is designed so that the flying insect cannot escape before its is immobilized.

### Brief description of the drawings

Figure 1 is an illustration of a cross-sectional side view of a system for monitoring flying insects according to embodiments of the present invention.
Figure 2 is a side elevational, cross-sectional view of a system for monitoring flying insects according to embodiments of the present invention.
Figure 3 illustrates a cross-sectional view of a container side wall or bottom wall comprising at least five entrance channels according to embodiments of the present invention.
Figure 4a and 4b are perspective views of a system for monitoring flying insects according to embodiments of the present invention.
Figure 5 is a schematic flowchart according to a method of the present invention.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

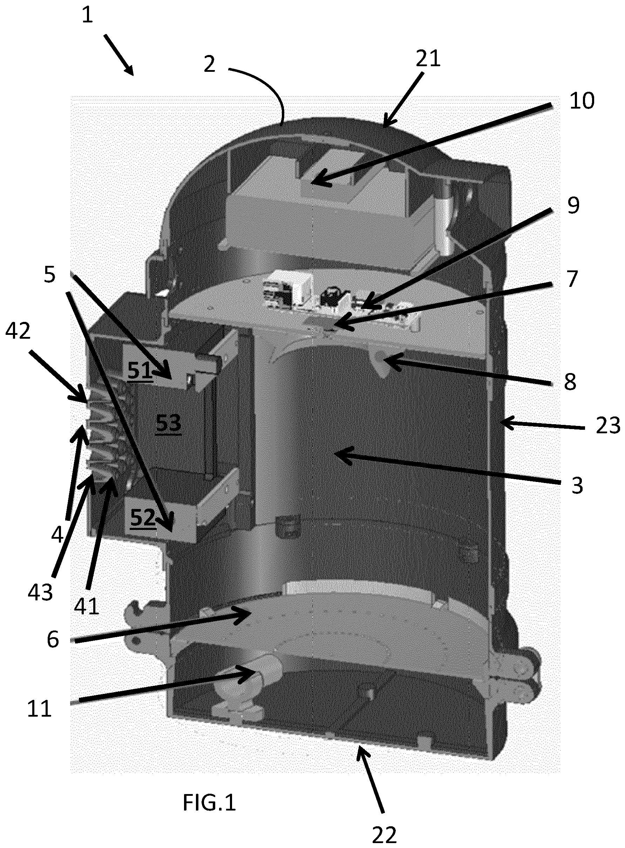

Referring to Figure 1, there is illustrated a perspective view of a cross-section of a system 1 for monitoring flying insects according to embodiments of the present invention. The system 1 comprises a container 2 having a container top wall 21, a container bottom wall 22, and a container side wall 23 connecting the container top wall and the container bottom wall to define an interaction volume 3.

The container 1 further comprising an entrance channel 4 disposed in the container side wall 23 or the container bottom wall 22 having a first open-end 41 facing the interaction volume, a second open-end 42 opposed to the first open-end 41. The first open-end 41 and the second open-end 42 are connected by a one-way tubular shaped passage region 43. This entrance channel 4, and in particular the passage region 43, is configured to guide a flying insect from outside 44 the container to the interaction volume 3.

The interaction volume 3 of the container 2 comprises a wingbeat sensor 5. The wingbeat sensor 5 has a wingbeat sensor 51 emitter disposed opposite to a wingbeat sensor receiver 52. The emitter 51 and the receiver 52 are separated from each other and defining a region 53 between them configured to measure a wingbeat signal of a flying insect that entered the system 1 via the entrance channel 4. This region 53 is also referred to as a first portion 53 of the interaction volume 3 configured to measure a wingbeat signal, wherein, according to embodiments the present invention, the first portion 53 is located closely inward from the first open-end 41 of the entrance channel 4. Wingbeat recordings have been studied for many years as a fingerprint of the insect species. Lab results were generally positive, but commercial use of a wingbeat sensor to identify flying insects on the species level has not been a success to date. Many, often hard to control, factors do influence the wingbeat pattern, and should be minimized whenever possible. Factors include temperature and humidity, for which can be accounted. More complex is the influence of the large variability in flying pattern - straight vs curved flight, taking off vs landing, increasing/decreasing altitude. Also insect crawling through the wingbeat sensor generate distorted patterns that complicate the accurate discrimination between species, and counting of these species.

The interaction volume 3 of the container 2 further comprises an insect immobilization surface 6 adapted to capture and immobilize the flying insect. According to embodiments of the present invention, the insect immobilization surface 6 may be a sticky or adhesive plate, surface or layer. It may also be a pressure sensitive adhesive layer or a pulse voltage electric grid. The immobilization surface has to be configured to immobilize the flying insect such that optical image data may be obtained from the immobilized flying insect. The portion of segment of the immobilization surface 6 covered by the captured flying insect may also be referred to as the unique segment.

The interaction volume 3 of the container 2 further comprises an optical image sensor 7 having a field of view in the direction of the insect immobilization surface 6 so that, when in use, the field of view covers at least a portion of the unique segment of the insect immobilization surface 6. According to embodiments of the present invention, the optical image sensor 7 may be a camera or a multi-pixel optical sensors so that the multiple pixels of the optical sensor each correspond to a unique segment of the floor surface within a field of view of the multi-pixel optical sensor.

The interaction volume 3 of the container 2 further comprises an illumination means configured to illuminate the unique segment of the insect immobilization. According to embodiments of the present invention, the illumination means 8 may be an artificial illuminating means, like, a light source or a lamp. According to embodiments of the present invention, the illuminating means may also be natural illuminating means like solar radiation entering the container 2 and interaction volume 3 via a portion of the walls of the container 2 configured to be transparent to visible light. The embodiment as depicted in Figure 1 makes use of an artificial light source 8, e.g. a lamp.

The system 1 further comprises a processing unit 9 in communication with the wingbeat sensor 5 and the optical image sensor 7, wherein the processing unit 9 is configured to receive and process the wingbeat signal from the wingbeat sensor 5 and the optical image data from the optical image sensor 7 to monitor, when in use, the flying insect.

According to embodiments of the present invention, the system 1 may further comprise a wireless connection unit 10 configured to communicate with the processing unit 9 and with remote data processing units (not shown) allowing the system 1 to be accessed and monitored remotely. Multiple systems according to embodiments of the present invention can be accesses remotely to form a so-called sensor network for surveillance of a whole region.

The system may also comprise a flying insect attractant at least disposed on or in the vicinity of the insect immobilization surface 6, wherein the flying insect attractant is configured to act on the smell or the sight of the flying insect. Referring to Figure 1, there is illustrated an attractant blowing device 11 disposed below the immobilization surface 6 and configured to blow attractant gas inside the interaction volume. The attractant gas may spread throughout the interaction volume 3 via small openings in the immobilization surface 6. An attractant may not only attract the insects to enter the container 2, but also motivates them to search for it in the container 2, in particular the interaction volume 3. This way, insects do not hover around for a too long time, minimizing double counts.

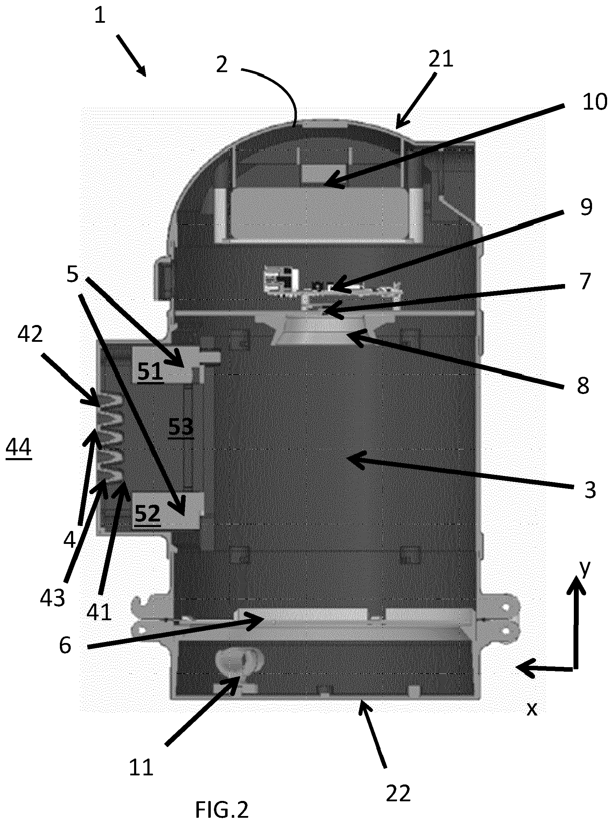

Referring to Figure 2, there is depicted a cross-sectional side via of the system for monitoring flying insects as described in relation to Figure 1.

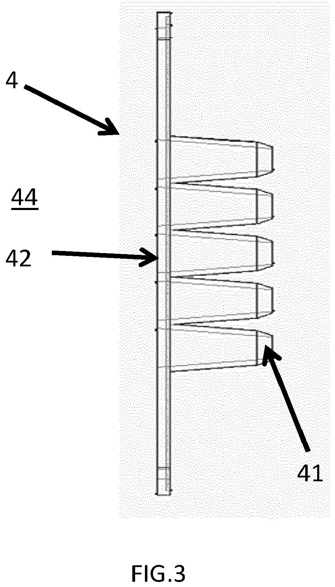

Referring to Figure 3, there is illustrated a cross-sectional view of a container side wall or bottom wall comprising at least five entrance channels 4. The entrance channels 4 have each a first open-end 41 facing the interaction volume and a second open-end 42 facing the environment 44 of the container 2. According to embodiments of the present invention, these entrance channels, also referred to as optimized trap entrances, are in fact small tubular holes or passages with sharp ends. When entering the container 1, flying insects typically sit on the bottom of these channels or tubes, crawl from the second open-end 42 to the first open-end 41 and then start flying to the interior or interaction volume of the container or trap. These entrance channels 4 may be truncated conic- or pyramid shaped wherein the second open-end 42 defines the base and the first open-end 41 the (truncated) top.

According to embodiments of the invention, a container side wall 23 or bottom wall 22 may comprise a plurality of entrance holes configured in a two dimensional array of m rows and n columns, wherein m and n are positive integers having a sum larger than three. The cross-sectional opening or diameter of the second open-ends does not have to be the same across all the entrance channels of the plurality of entrance channels. This has the advantage that the system may be used for flying insects having different sizes without the need the adapt the openings depending on its intended research or use.

According to embodiments of the present invention, the walls of the entrance channel 4 may be transparent to wingbeat sensor operating wavelengths. In these embodiments, the emitter 51 and the receiver 52 may be placed such that the first portion 53 receives at least a portion of the entrance channel 4. This has the advantageous that a wingbeat signal may be measured when the flying insect is flying through the entrance channel 4.

According to embodiments of the present invention, the wingbeat sensor 5 is placed just after the first-open end 41 of the entrance channel 4, such that when the flying insect starts to fly again directly enters the first portion 53 of the wingbeat sensor 5. The emitter 51 and receiver 52 of the wingbeat sensor are positioned horizontally, i.e. separated in the Y-direction (Figure 2) (although vertically, i.e. separated in the X-direction (Figure 2), is possible as well), just inwards from the entrance channel 4. By initiating their flight from the entrance channel 4, in particular the first open-end 41, towards the interaction volume 3 of the container 2, the insects move as controlled as possible through the sensor opening, approximately in the same direction and stage of flying (short after take-off from the entrance channel 4), removing an important part of the variation that is typically seen when analyzing wingbeat signals from flying insects that are free to choose direction. This is essential in building a performant classifier.

According to embodiments of the present invention, the configuration of the features as shown in figure 1 and 2 may be rotated 90° in the X-Y plane (Figure 2). Embodiments of the invention obtained in this way may have entrance channels in the container bottom wall 22 and an immobilization surface disposed on the inner side of the container side wall 23. The optical image sensor may be disposed opposite to the immobilization surface to take optical image data of the surface.

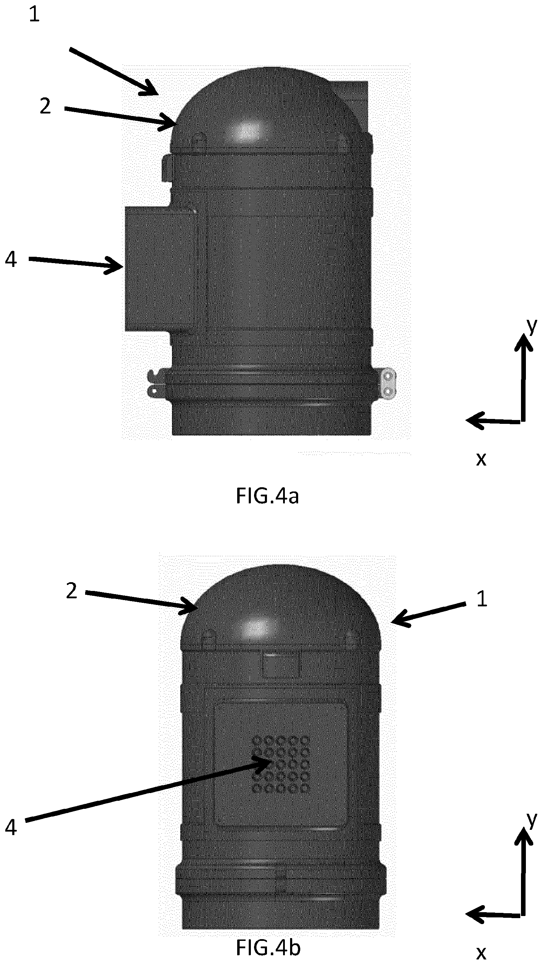

Referring to Figure 4a and 4b, there is illustrated a perspective view from a system for monitoring flying insects according to embodiments of the invention. The system 1 is closed (as it would be in operation) and the container 2 and the entrance channels 4 are visible. Reference is made to the description of Figure 1, 2 and 3 for more details on the features.

According to embodiments of the present invention, a method for monitoring flying insects is also presented. The method uses a system according to embodiments of the present invention and comprises the steps of
detecting a flying insect with the first portion of the interaction volume;
measuring the wingbeat signal for the flying insect and providing the wingbeat signal to the processing unit;
taking optical image data from the unique segment of the insect immobilization surface and providing the optical image data to the processing unit; and
processing the wingbeat signal and the optical image data to classify the flying insect.

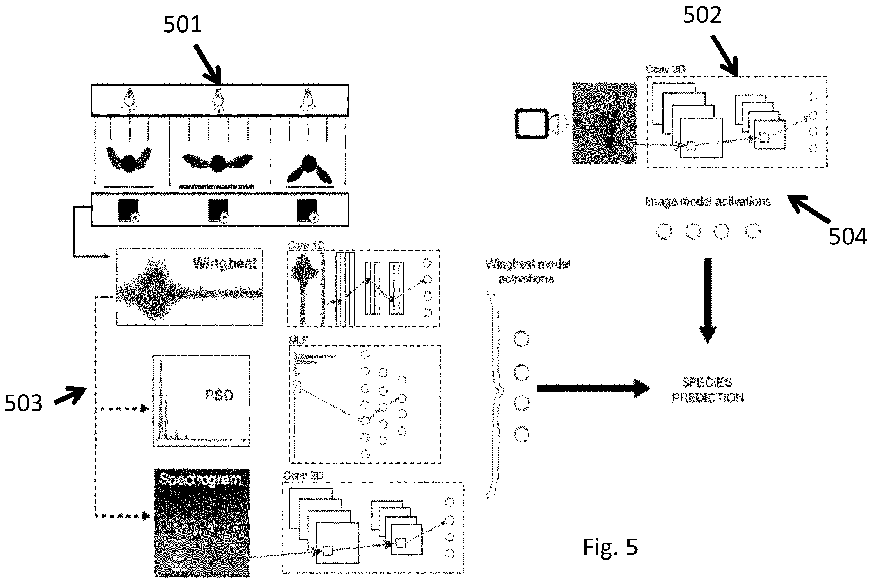

The processing unit 9 is configured to analyze the wingbeat signals as well as at least one image of the sticky plate or a part thereof. Referring to Figure 5, the combination of the wingbeat 501 and image data 502 are used to count and identify the insects that are lured into the system, in particular the container and interaction volume. The method according to embodiments of the invention thus applies a sensor-fusion approach towards a better identification, although the individual signals (i.e., the wingbeat and optical image(s)) separately, might already prove to provide sufficient information for some cases. Wingbeat signals 501 can be processed 503 as raw time signals, as frequency signals or their combinations, using a spectrogram image approach. Images can be processed 504 using any computational means, such as Deep Learning algorithms. Data encodings can be produced by the models used for any data type. These encodings are representations of the original data with lower dimensionality. For example, in the case of a Neural Network the unit activations of its last layer can be used to train a new model on a novel task. Hence, the concatenation of a Wingbeat model and an Image model through their activations, can compose the sensor-fusion model. This model's output is a probability vector with a number of units equal to the number of insect species being modelled, which assigns its maximum value to the predicted class. It is clear that alternative classifiers might be used instead.

It is to be understood that although preferred embodiments, specific constructions and configurations, as well as materials, have been discussed herein for devices according to the present invention, various changes or modifications in form and detail may be made without departing from the scope and technical teachings of this invention

## Claims

1. A system for monitoring flying insects, the system comprising:
- a container having a container top wall, a container bottom wall, and a container side wall connecting the container top wall and the container bottom wall to define an interaction volume, the container further comprising an entrance channel disposed in the container side wall or the container bottom wall having a first open-end facing the interaction volume, a second open-end opposed to the first open-end and a one-way tubular shaped passage region connecting the second open-end with the first open-end and configured to guide a flying insect from outside the container to the interaction volume;
- the interaction volume comprising:
- a wingbeat sensor comprising a wingbeat sensor emitter disposed opposite to a wingbeat sensor receiver, wherein the wingbeat sensor emitter and receiver defining a first portion of the interaction volume configured to measure a wingbeat signal, wherein the first portion is located closely inward from the first open-end of the entrance channel;
- an insect immobilization surface adapted to capture and immobilize the flying insect;
- an optical image sensor having a field of view in the direction of the insect immobilization surface so that, when in use, the field of view covers at least a portion of a unique segment of the insect immobilization surface;
- an illumination means configured to illuminate the unique segment of the insect immobilization; and
- a processing unit in communication with the wingbeat sensor and the optical image sensor, wherein the processing unit is configured to receive and process the wingbeat signal from the wingbeat sensor and the optical image data from the optical image sensor to monitor, when in use, the flying insect.

2. The system according to claim 1, wherein the entrance channel is truncated conical-shaped having a truncated cone base defined by the second open-end and a truncated cone top defined by the first open-end.

3. The system according to claim 1, wherein the entrance channel is truncated pyramid-shaped having a truncated pyramid base defined by the second open-end and truncated pyramid top defined by the first open-end.

4. The system according to any of the previous claims, wherein the first open-end is a sharp open-end configured to force the flying insect to fly when leaving the entrance channel and entering the interaction volume.

5. The system according to any of the previous claims, wherein the entrance channel is part of a plurality of entrance channels disposed in the same container side wall or container bottom wall of the container.

6. The system according to the previous claim, wherein the plurality of entrance channels is arranged in a two dimensional array configuration of m rows and n columns, wherein m and n are positive integers and (m+n) ≥ three.

7. The system according to any of the previous claims, wherein the entrance channel comprises walls transparent to wingbeat sensor operating wavelengths and the entrance channel is disposed at least partly within the first portion of the interaction volume.

8. The system according to any of the previous claims, wherein the interaction volume further comprises a flying insect attractant at least disposed on or in the vicinity of the insect immobilization surface, wherein the flying insect attractant is configured to act on the smell or the sight of the flying insect.

9. The system according to any of the previous claims, wherein the illumination means is selected from the list consisting of an artificial illumination source and natural illumination.

10. The system according to any of the previous claims, wherein the shape of the container is substantially spherical shaped, rectangular shaped or cubical shaped.

11. The system according to any of the previous claims, further comprising a sensor in communication with the processing unit and adapted to measure the temperature, humidity, CO2 density, concentration of particles, concentration of the flying insect attractant or light intensity, or at least a combination of these parameters within the interaction volume.

12. A method for monitoring flying insects using a system for monitoring flying insects, the system comprising:
- a container having a container top wall, a container bottom wall, and a container side wall connecting the container top wall and the container bottom wall to define an interaction volume, the container further comprising an entrance channel disposed in the container side wall or the container bottom wall having a first open-end facing the interaction volume, a second open-end opposed to the first open-end and a one-way tubular shaped passage region connecting the second open-end with the first open-end and configured to guide a flying insect from outside the container to the interaction volume;
- the interaction volume comprising:
- a wingbeat sensor comprising a wingbeat sensor emitter disposed opposite to a wingbeat sensor receiver, wherein the wingbeat sensor emitter and receiver defining a first portion of the interaction volume configured to measure a wingbeat signal, wherein the first portion is located closely inward from the first open-end of the entrance channel;
- an insect immobilization surface adapted to capture and immobilize the flying insect;
- an optical image sensor having a field of view in the direction of the insect immobilization surface so that, when in use, the field of view covers at least a portion of a unique segment of the insect immobilization surface;
- an illumination means configured to illuminate the unique segment of the insect immobilization; and
- a processing unit in communication with the wingbeat sensor and the optical image sensor, wherein the processing unit is configured to receive and process the wingbeat signal from the wingbeat sensor and the optical image data from the optical image sensor to monitor, when in use, the flying insect;
wherein the method comprising the steps:
- detecting a flying insect with the first portion of the interaction volume;
- measuring the wingbeat signal for the flying insect and providing the wingbeat signal to the processing unit;
- taking optical image data from the unique segment of the insect immobilization surface and providing the optical image data to the processing unit; and
- processing the wingbeat signal and the optical image data to classify the flying insect.

13. The method according to claim 12, further comprising a step of detecting the flying insect when it enters the interaction volume.

14. The method according to claim 12 or 13, wherein the step of taking optical image data from the unique segment of the insect immobilization surface is repeated until the flying insect is immobilized.

15. The method according to any of the claims 12 to 14, wherein the system for monitoring flying insects corresponds with a system according to any of the preceding claims 1 to 11.
